Europäisches Patentamt

European Patent Office

Office européen des brevets

(11) Veröffentlichungsnummer : **0 131 708**
B1

# EUROPÄISCHE PATENTSCHRIFT

(45) Veröffentlichungstag der Patentschrift :
04.05.88

(51) Int. Cl.⁴ : **G 01 R 31/28**

(21) Anmeldenummer : **84105500.7**

(22) Anmeldetag : **15.05.84**

(54) Schaltungsanordnung zum Testen einer digitalen Schaltung.

(30) Priorität : 13.07.83 DE 3325247

(43) Veröffentlichungstag der Anmeldung :
23.01.85 Patentblatt 85/04

(45) Bekanntmachung des Hinweises auf die Patenterteilung : 04.05.88 Patentblatt 88/18

(84) Benannte Vertragsstaaten :
FR GB IT

(56) Entgegenhaltungen :
DE-A- 2 538 651
US-A- 3 633 100
IBM TECHNICAL DISCLOSURE BULLETIN, Band 25,
Nr. 8, Januar 1983, Seiten 4244-4245, New York, US;
L.C. EGGEBRECHT "Programmable delay lines in
signature analysis testing"

(73) Patentinhaber : **ANT Nachrichtentechnik GmbH
Gerberstrasse 33
D-7150 Backnang (DE)**

(72) Erfinder : **Annecke, Karl-Heinz, Dr.-Ing.
Nansenstrasse 25/2
D-7150 Backnang (DE)**
Erfinder : **Bredemeier-Klonki, Volker, Dipl.-Ing.
Königsberger Strasse 36
D-7155 Oppenweiler (DE)**

(74) Vertreter : **Wiechmann, Manfred, Dipl.-Ing.
ANT Nachrichtentechnik GmbH Gerberstrasse 33
Postfach 11 20
D-7150 Backnang (DE)**

## Beschreibung

Die Erfindung betrifft eine Schaltungsanordnung für den dynamischen Echtzeit-Test einer synchronen Digitalschaltung gemäß Oberbegriff des Anspruchs 1.

Eine fertig entwickelte und realisierte synchrone Digitalschaltung muß vor ihrem Systemeinsatz nicht nur einem statischem Test sondern auch einem dynamischen Echtzeit-Test unterzogen werden, wobei durch letzteren zur Klassifizierung der Schaltung die Grenzfrequenz ermittelt wird.

Durch die deutsche Offenlegungsschrift DE-A-25 38 651 ist ein Verfahren zum Testen einer digitalen elektronischen Schaltung mit Signaturanalyse sowie eine Vorrichtung hierzu bekanntgeworden, wobei die von einem Taktgeber getaktete digitale Schaltung an Meßpunkten ein digitales Signal abgibt, welches zu bestimmten gleichlangen Zeitperioden mittels Kennzeichengenerator zu einem Kennzeichen verarbeitet und mit einem Soll-Bit-Muster verglichen wird.

Eine solche Vorrichtung arbeitet jedoch nur mit Taktfrequenzen von ungefähr bis zu 50 MHz. Bei Taktfrequenzen darüberhinaus ergibt eine solche Vorrichtung Fehlanzeigen.

Der Erfindung lag deshalb die Aufgabe zugrunde, eine Schaltungsanordnung anzugeben, mit der ein dynamischer Echtzeit-Test bei Frequenzen von > 100 MHz ermöglicht wird.

Die Lösung erfolgt mit den im Patentanspruch 1 angegebenen Mitteln.

Durch die Unteransprüche ergeben sich vorteilhafte Weiterbildungen.

Es folgt nun die Beschreibung anhand der Figuren.

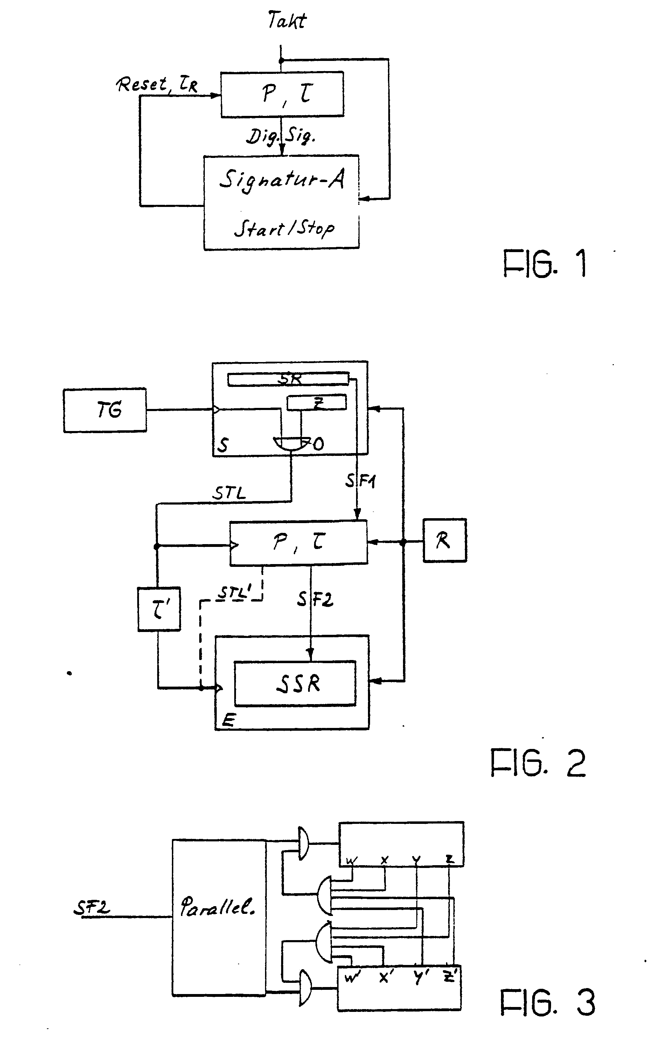

Die Figur 1 zeigt eine Vorrichtung zum Testen einer digitalen Schaltung nach dem Stande der Technik. In der Figur 2 ist ein Ausführungsbeispiel der Erfindung dargestellt. In Figur 3 schließlich ist eine Weiterbildung der Signaturanalyseeinrichtung mittels zweier parallelisierter Schieberegister gezeichnet.

In Figur 1 ist der Prüfling P dargestellt, der eine Verzögerungszeit $\tau$ habe. Sowohl dem Prüfling als auch der Signaturanalyseeinrichtung Signatur-A ist der Takt direkt zugeführt. Der Prüfling P gibt ein digitales Signal Dig. Sig. an die Signaturanalyseeinrichtung ab, welche daraus die Signatur erzeugt. Mit einer Start/Stopeinrichtung Start/Stop ist der Prüfling über eine Rücksetzleitung Reset rücksetzbar, wobei diese Normierung mit einer Verzögerungszeit $\tau_R$ erfolge. Es ist leicht einzusehen, daß bei größeren Taktfrequenzen, bei denen die Laufzeit $\tau_R$ in die Größenordnung der Taktperiode kommt, Bitfehler erzeugt werden. Dasselbe gilt auch für die Verzögerungszeit $\tau$ des Prüflings.

Abhilfe schafft eine Anordnung gemäß Figur 2, aus der ein Taktgenerator TG, ein Sender S, der Prüfling P und ein Empfänger E erkennbar sind. Im Sender S ist ein rückgekoppeltes Schieberegister SR enthalten, das bei n Stufen einen seriellen Datenstrom SF1 der Länge $2^{n-1}$, den sogenannten

Stimulus erzeugt. Der Sender enthält weiterhin einen Zähler Z, durch den eine definierte Anzahl von Taktimpulsen ausgezählt wird. Der Takt wird über ein Oderglied 0 dem Prüfling P zugeführt. Hat der Zähler den höchsten Zählstand erreicht, so wird der Takt STL gesperrt. Mittels einer Rücksetzeinrichtung R ist Sender, Prüfling und Empfänger gleichzeitig ein Systemrücksetzimpuls übergebbar, wodurch der Systemtakt wieder freigegeben wird. Durch die im Sender erzeugte Datenfolge SF1, welche ein im Bezug auf das Meßfenster M, das dem höchsten Zählerstand entspricht, definiertes und reproduzierbares Bitmuster ist, werden die Schaltungsknoten der im Prüfling P angesteuerten Signalpfade angeregt, wobei der Prüfling gleichzeitig mit dem während des Meßfensters freigegebenen Systemtakt STL getaktet wird. Dieselbe Anzahl von Takten werden über ein Verzögerungsglied $\tau'$, dessen Verzögerungszeit der Verzögerungszeit $\tau$ des Prüflings entspricht, verzögert dem Empfänger E zugeführt. Die im Prüfling erzeugte Signaldatenausgangsfolge SF2 wird somit zeitrichtig dem Empfänger zur Verfügung gestellt, in dem diese Folge mittels eines rückgekoppelten Schieberegisters SSR zeitlich aufsummiert und damit komprimiert wird. An den Ausgängen des Signaturschieberegisters SSR kann nunmehr eine der Länge des Schieberegisters entsprechendes langes Zeichen, die Signatur, abgegriffen werden. Danach erfolgt ein Vergleich mit einer Sollsignatur, wobei sich fehlende Bits oder ein zeitlicher Versatz von Bits in einer Abweichung äußern.

Auf das Verzögerungsglied $\tau'$ kann verzichtet werden, wenn die Systemtaktfolge durch den Prüfling geführt und verzögert wird und als Systemtakt STL' (mittels gestrichelter Leitung) dem Empfänger zugeführt wird. Kompensationsmaßnahmen sind dann nicht notwendig, wenn der so durchgeschleifte Systemtakt der Ausgangsdatenfolge SF2 des Prüflings korrekt zeitlich zugeordnet ist.

In Figur 3 ist ein Signaturschieberegister SSR gezeichnet, welches zwei parallel betriebene Schieberegister benutzt. Die zu komprimierenden Daten SF2 werden zunächst zeitrichtig in zwei parallele Zweige aufgeteilt und anschließend den beiden Schieberegistern zugeführt, wobei das eine Schieberegister die geradzahligen Bits und das andere Schieberegister die ungeradzahligen Bits erhält. Die beiden Schieberegister ergeben bei entsprechenden Rückkopplungen an ihren Ausgängen die gleiche Signatur wie ein einziges Schieberegister der doppelten Länge. Der Vorteil der Parallelisierung in zwei Zweigen liegt darin, daß nur die halbe Systemfrequenz benötigt wird.

Ein besonders geringer Aufwand an Logikbausteinen ergibt sich, wenn die Anzahl n der Parallelzweige kleiner ist als die Stellenzahl der ersten rückgekoppelten Zelle im identischen seriellen Schieberegister. Dann ergibt sich eine Reduzierung der Betriebsfrequenz um den Faktor n.

Beispielsweise läßt sich ein serielles 16-Bit-Schieberegister mit den Rückkopplungen Q 7, Q 9, Q 12 und Q 16 zur Erzeugung einer PN-Frequenz maximaler Länge in vorteilhafter Weise in n = 4 parallele Zweige aufspalten. Sowohl der Eratz des Schieberegisters im Sender als auch im Signaturanalysator durch parallelisierte Strukturen erbringt einen frequenzmäßig wesentlich unkritischeren Schaltungsaufbau.

**Patentansprüche**

1. Schaltungsanordnung für den dynamischen Echtzeit-Test eines als synchrone Digitalschaltung ausgeführten Prüflings (P), mit einem Taktgenerator (TG), durch den der Prüfling (P) mit einer Anzahl Takte getaktet wird, wodurch an den Schaltungsknoten des Prüflings (P) ein digitales Signal entsteht, mit einem als Signatur-Analyse-Einrichtung ausgeführten Empfänger (E) zur Kompression und Prüfung des digitalen Signals, dadurch gekennzeichnet, daß ein Sender (S) mit einem Zähler (E) und einem PN-Generator (SR) vorgesehen ist, durch den ein reproduzierbares Stimulus-Signal (SF1) mit einer durch den die Takte zählenden Zähler festgelegten, einem Meßfenster (M) entsprechenden Länge erzeugt wird, daß eine Rücksetzeinrichtung (R) vorgesehen ist, durch welche der Prüfling (P), der Sender (S) und der Empfänger (E) rücksetzbar sind, worauf der Prüfling (P) mit einer durch den Zähler bestimmten Anzahl von Takten und dem zu den Takten synchronen Stimulus-Signal (SF1) angeregt wird und worauf der Empfänger (E) mit derselben Anzahl von Takten, jedoch um eine Zeit verzögert, die der Verzögerungszeit $\tau$ des Prüflings (P) entspricht, getaktet wird.

2. Schaltungsanordnung nach Anspruch 1, dadurch gekennzeichnet, daß ein auf die Verzögerungszeit $\tau$ einstellbares Verzögerungsglied ($\tau'$) zwischen Empfängertakteingang und Taktgeneratorausgang eingefügt ist.

3. Schaltungsanordnung nach Anspruch 1, dadurch gekennzeichnet, daß der Prüfling (P) einen Taktausgang aufweist, an den der um die Verzögerungszeit $\tau$ des Prüflings verzögerte Takt (STL') entnehmbar ist.

4. Schaltungsanordnung nach einem der vorhergehenden Ansprüche, dadurch gekennzeichnet, daß die Kompression des digitalen Signals (SF2) im Empfänger (E) durch ein rückgekoppeltes m-bit-Signatur-Schieberegister (SSR) erfolgt (m = 1, 2, 3...).

5. Schaltungsanordnung nach einem der Ansprüche 1 bis 3, dadurch gekennzeichnet, daß die Kompression des digitalen Signals (SF2) im Empfänger (E) durch n parallel betriebene rückgekoppelte m/n-Bit-Schieberegister erfolgt.

6. Schaltungsanordnung nach einem der vorhergehenden Ansprüche, dadurch gekennzeichnet, daß zur Erzeugung des Meßfensters (M) im Sender (S) ein Oderglied (O) vorgesehen ist, auf dessen Eingänge der Taktgeneratorausgang und der Zählerausgang geführt sind und dessen Ausgang mit dem Takteingang des Prüflings (P) verbunden ist.

7. Schaltungsanordnung nach einem der vorhergehenden Ansprüche, dadurch gekennzeichnet, daß der PN-Generator ein rückgekoppeltes p-bit-Schieberegister (SR) enthält.

8. Schaltungsanordnung nach einem der Ansprüche 1 bis 7, dadurch gekennzeichnet, daß der PN-Generator q parallel betriebene, rückgekoppelte p/q-Bit-Schieberegister enthält.

**Claims**

1. A circuit arrangement for dynamically real time testing a test object (P) configured as a synchronous digital circuit including a clock pulse generator (TG) which clocks the test object (P) with a plurality of clock pulses, thus producing a digital signal at the circuit nodes of the test object (P), the circuit further including a receiver (E) configured as a signature analysis device for compressing and testing the digital signal, characterized in that a transmitter (S) is provided which includes a counter (Z) and a PN generator (SR) which produces a reproducible stimulus signal (SF1) of a length corresponding to a measuring window (M) and being fixed by the counter counting the clock pulses ; a reset device (R) is provided with which the test object (P), the transmitter (S) and the receiver (E) can be set back, whereupon the test object (P) is stimulated by a number of clock pulses determined by the counter and corresponding to the stimulus signals (SF1) which are synchronous with the clock pulses and whereupon the receiver (E) is clocked with the same number of clock pulses but with a time delay which corresponds to the delay time $\tau$ of the test object (P).

2. A circuit arrangement according to claim 1, characterized in that a delay member ($\tau'$) which can be set to the delay time $\tau$ is included between the receiver clock pulse input and the clock pulse generator output.

3. A circuit arrangement according to claim 1, characterized in that the test object (P) has a clock pulse output at which the clock pulse (STL') delayed by the delay time $\tau$ of the test objects can be obtained.

4. A circuit arrangement according to one of the preceding claims, characterized in that the compression of the digital signal (SF2) in the receiver (E) is effected by means of a feedback connected m-bit signature shift register (SSR) (m = 1, 2, 3,...).

5. A circuit arrangement according to one of claims 1 to 3, characterized in that the compression of the digital signal (SF2) in the receiver (E) is effected by n parallel operated feedback connected m/n-bit shift registers.

6. A circuit arrangement according to one of the preceding claims, characterized in that an OR member (O) is provided in the transmitter (S) to generate the measuring window (M), with the clock pulse generator output and the counter output being connected to the inputs of said OR member while its output is connected with the clock pulse input of the test object (P).

7. A circuit arrangement according to one of the preceding claims, characterized in that the PN generator includes a feedback connected p-bit shift register (SR).

8. A circuit arrangement according to one of claims 1 to 7, characterized in that the PN generator includes q parallel operated, feedback connected p/q-bit shift registers.

### Revendications

1. Montage pour l'essai dynamique en temps réel d'un circuit à tester (P) sous forme d'un circuit numérique synchrone, montage qui comporte un générateur de rythme (TG) qui alimente le circuit à tester (P) avec un certain nombre d'impulsions de rythme, ce qui produit un signal numérique sur les noeuds du circuit à tester (P), de même qu'un récepteur (E) réalisé sous forme d'un dispositif d'analyse de signature pour la compression et le contrôle du signal numérique, caractérisé en ce qu'il comprend un émetteur (S) avec un compteur (Z) et un générateur PN (SR), par lesquels est produit un signal-stimulus (SF1) reproductible, dont la longueur est fixée par le compteur, lequel compte les impulsions de rythme, la longueur correspondant à une fenêtre de mesure (M), ainsi qu'un dispositif de remise à l'état initial (R), par lequel le circuit à tester (P), l'émetteur (S) et le récepteur (E) peuvent être remis à l'état initial, après quoi le circuit à tester (P) est excité par un nombre d'impulsions de rythme déterminé par le compteur et par le signal-stimulus (SF1) synchrone avec ces impulsions de rythme et après quoi le récepteur (E) est alimenté avec le même nombre d'impulsions de rythme, mais avec un retard qui correspond au temps de retard $\tau$ du circuit à tester (P).

2. Montage selon la revendication 1, caractérisé en ce qu'un élément de retard ($\tau'$), ajustable sur le temps de retard $\tau$, est interposé entre l'entrée de rythme du récepteur et la sortie du générateur de rythme.

3. Montage selon la revendication 1, caractérisé en ce que le circuit à tester (P) présente une sortie de rythme, sur laquelle peut être prélevé le signal de rythme (STL') retardé du temps de retard $\tau$ du circuit à tester.

4. Montage selon une des revendications précédentes, caractérisé en ce que la compression du signal numérique (SF2) dans le récepteur (E) s'effectue par un registre à décalage de signature (SSR), registre qui est à m bits et à rétroaction (m = 1, 2, 3...).

5. Montage selon une des revendications 1 à 3, caractérisé en ce que la compression du signal numérique (SF2) dans le récepteur (E) s'effectue par n registres à décalage travaillant en parallèle, à rétroaction et à m/n bits.

6. Montage selon une des revendications précédentes, caractérisé en ce que, pour créer la fenêtre de mesure (M), l'émetteur (S) comporte un élément OU (O), aux entrées duquel sont reliées la sortie du générateur de rythme et la sortie du compteur et à la sortie duquel est reliée l'entrée de rythme du circuit à tester (P).

7. Montage selon une des revendications précédentes, caractérisé en ce que le générateur (PN) contient un registre à décalage (SR) à p bits et à rétroaction.

8. Montage selon une des revendications 1 à 7, caractérisé en ce que le générateur PN contient q registres à décalage travaillant en parallèle, à rétroaction et à p/q bits.

FIG. 1

FIG. 2

FIG. 3

1